# EUROPÄISCHE PATENTSCHRIFT

(11) **EP 3 720 663 B1**
(45) Veröffentlichungstag und Bekanntmachung des Hinweises auf die Patenterteilung: **07.01.2026**
(21) Anmeldenummer: 18803612.3
(22) Anmeldetag: 12.11.2018
(51) Int. Cl.: B25J 9/00, G05B 19/418

(54) **BETREIBEN EINES ROBOTERS**
OPERATING A ROBOT
COMMANDE D'UN ROBOT

(30) Priorität: 08.12.2017 DE 102017011342
(43) Veröffentlichungstag der Anmeldung: 14.10.2020
(73) Patentinhaber: KUKA Deutschland GmbH, 86165 Augsburg (DE)
(72) Erfinder: BURKHART, Stefan, 89407 Dillingen (DE); SCHREITTMILLER, Robert, 86316 Stätzling (DE)
(74) Vertreter: Schlotter, Alexander Carolus Paul
(86) Internationale Anmeldenummer: PCT/EP2018/080882
(87) Internationale Veröffentlichungsnummer: WO 2019/110243

(56) Entgegenhaltungen:
- EP-A1- 2 315 093
- DE-A1- 10 162 967
- DE-A1- 10 300 606
- JP-A- H10 105 217
- US-A- 5 434 389
- US-A- 5 602 968

## Beschreibung

Die vorliegende Erfindung betrifft ein Verfahren und eine Steuerung zum Betreiben eines Roboters sowie eine Roboteranordnung mit dem Roboter und der Steuerung und ein Computerprogrammprodukt zur Durchführung des Verfahrens.

Aus betriebsinterner Praxis ist es bekannt, Arbeitsbahnen von Robotern relativ zu bewegten Bezugssystemen vorzugeben, beispielsweise, um Werkstücke auf einem Förderband mit dem Roboter zu bearbeiten und/oder zu bewegen.

Die DE 103 00 606 A1 betrifft ein Verfahren zum Anfahren an ein sich bewegendes Stückgut über einen Anfahrweg, wobei sich eine Anfahrposition des Stückgutes innerhalb eines Anfahrbereiches befindet, wobei in einem ersten Berechnungsschritt Steuerdatensätze im Voraus berechnet werden, wobei die Steuerdatensätze einen Verfahrsatz enthalten, der Wegstücke umfasst, die den Anfahrweg für eine Anfahrposition abbilden, wobei bei dem ersten Berechnungsschritt für den Verfahrsatz von einer ersten festgelegten Anfahrposition des Stückgutes ausgegangen wird, wobei der Verfahrsatz zur ersten festgelegten Position des Stückgutes bezüglich der Anfahrgeschwindigkeit optimiert wird, wobei unmittelbar vor dem Starten der Bewegung für jedes Wegstück die aktuelle Anfahrposition des Stückgutes ermittelt wird, und ein zweiter Berechnungsschritt durchgeführt wird, bei dem das jeweils aktuell abzufahrende Wegstück abhängig von der ermittelten aktuellen Position des Stückgutes so verändert wird, so dass der Anfahrweg in Richtung der Anfahrposition verschoben wird, wobei eine Anfahrbewegung durch Abfahren des in dem zweiten Berechnungsschritt ermittelten Wegstückes durchgeführt wird.

Nach der DE 101 62 967 A1 wird die aktuelle Position eines Werkstücks nacheinander in einem Fördermittelkoordinatensystem aktualisiert, und der Weg eines Roboters, um dem Werkstück zu folgen, wird durch Transformieren der Position des Werkstücks von dem Fördermittelkoordinatensystem in ein Roboterkoordinatensystem gebildet.

Aufgabe der vorliegenden Erfindung ist es, den Betrieb von Robotern beim Abfahren solcher Arbeitsbahnen, die relativ zu bewegten Bezugssystemen vorgegeben sind, zu verbessern.

Diese Aufgabe wird durch ein Verfahren mit den Merkmalen des Anspruchs 1 gelöst. Ansprüche 9 - 11 stellen eine Steuerung, Roboteranordnung bzw. ein Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist ein Verfahren zum Betreiben eines Roboters bzw. einer Roboteranordnung mit dem Roboter die Schritte auf:
- Vorgeben einer oder mehrerer, insbesondere nacheinander, abzufahrenden, insbesondere zukünftiger, Arbeitsbahn(en) des Roboters relativ zu einem bewegten Bezugssystem;
- Prognostizieren (jeweils) einer oder mehrerer Pose(n) des Bezugssystems, insbesondere relativ zu einer Umgebung oder Roboterbasis, für die bzw. eine oder mehrere der vorgegebenen Arbeitsbahn(en jeweils) auf Basis einer aktuellen Pose des Bezugssystems und einer Geschwindigkeit des Bezugssystems sowie einer Zeit bis zum Erreichen dieser Pose des Bezugssystems;
- Prognostizieren einer oder mehrerer Stellungen des Roboters und zeitlicher Ableitungen der Stellung(en) des Roboters umfassend eine Geschwindigkeit und Beschleunigung des Roboters in der (jeweiligen) Stellung, insbesondere relativ zu einer Umgebung bzw. Roboterbasis, für die (jeweils) abzufahrende Arbeitsbahn auf Basis der prognostizierten Pose(n) des Bezugssystems; und
- Überwachen eines Einhaltens einer vorgegebenen Begrenzung bei dieser bzw. diesen Stellung(en) und zeitlichen Ableitung(en).

Durch die Prognose einer (zukünftigen) Pose des Bezugssystems kann in einer Ausführung auf Basis der relativ zu dem Bezugssystem vorgegebenen Arbeitsbahn eine (zukünftige) Stellung des Roboters prognostiziert und diese auf Einhalten einer vorgegebenen Überwachung überwacht werden.

In einer Ausführung wird auch eine Geschwindigkeit des Bezugssystems, insbesondere relativ zur Umgebung bzw. Roboterbasis, in der prognostizierten Pose prognostiziert. Dann kann in einer Ausführung zusätzlich oder alternativ auch eine (zukünftige), insbesondere erste und/oder zweite, zeitliche Ableitung der Stellung des Roboters auf Basis dieser prognostizierten Geschwindigkeit des Bezugssystems prognostiziert und diese zeitliche Ableitung(en) auf Einhalten einer vorgegebenen Überwachung überwacht werden. Sofern die Geschwindigkeit des Bezugssystems konstant (vorgegeben) ist, kann diese in einer Ausführung als Geschwindigkeit des Bezugssystems in der prognostizierten Pose prognostiziert werden.

Der Roboter weist in einer Ausführung einen Roboterarm mit einer, in einer Ausführung stationären bzw. umgebungs- bzw. ortsfesten, Roboterbasis und/oder wenigstens drei, insbesondere wenigstens sechs, in einer Ausführung wenigstens sieben, Achsen bzw. Gelenken auf, die durch, insbesondere elektrische, Antriebe verstellbar sind bzw. (zum Abfahren der Arbeitsbahn(en)) verstellt werden.

Das Bezugssystem wird in einer Ausführung durch eine hierzu eingerichtete bzw. verwendete Einrichtung, insbesondere eine Fördereinrichtung bzw. ein Fördermittel wie zum Beispiel ein Förderband oder dergleichen, oder einen weiteren Roboter, bewegt bzw. ist relativ zu einer bewegten Förderfläche der Fördereinrichtung oder einem Endeffektor des weiteren Roboters ortsfest.

Bei solchen Roboteranordnungen kann die vorliegende Erfindung mit besonderem Erfolg verwendet werden.

Eine Arbeitsbahn kann eine oder mehrere vorgegebene Posen einer roboterfesten Referenz, insbesondere eines Endeffektors bzw. TCPs, des Roboters und/oder eine vorgegebene Verbindung zwischen diesen aufweisen, insbesondere hierdurch vorgegeben werden bzw. sein. Sie wird bzw. ist in einer Ausführung in einem kartesischen bzw. Arbeitsraum und/oder durch ein gespeichertes Arbeitsprogramm des bzw. für den Roboter(s) vorgegeben, das zum Betreiben des Roboters abgearbeitet bzw. ausgeführt wird. Dabei wird sowohl eine Programmierung bzw. Speicherung als auch ein Einlesen einer gespeicherten Arbeitsbahn bzw. ihrer Pose(n) und/oder Verbindungen vorliegend als Vorgeben der Arbeitsbahn im Sinne der vorliegenden Erfindung bezeichnet.

Eine Pose umfasst in einer Ausführung allgemein eine ein-, zwei- oder dreidimensionale Position und/oder eine ein-, zwei- oder dreidimensionale Orientierung. Entsprechend kann eine Pose des Bezugssystems insbesondere dessen Position und/oder Orientierung relativ zur Umgebung bzw. Roboterbasis definieren bzw. angeben, ein Punkt einer Arbeitsbahn insbesondere eine Position und/oder Orientierung der roboterfesten Referenz relativ zum bewegten Bezugssystem.

Die Geschwindigkeit des Bezugssystems, auf deren Basis die Pose(n) des Bezugssystems prognostiziert wird/werden, kann in einer Ausführung eine erfasste bzw. Ist-Geschwindigkeit, insbesondere in der aktuellen Pose, des Bezugssystems, und/oder eine vorgegebene bzw. Soll-Geschwindigkeit, insbesondere in der aktuellen Pose, des Bezugssystems aufweisen, insbesondere sein, in einer Ausführung also eine aktuell( erfasst)e Geschwindigkeit des Bezugssystems. Gleichermaßen kann die aktuelle Pose des Bezugssystems in einer Ausführung eine aktuell erfasste Pose sein. In einer Ausführung wird die aktuelle Pose und/oder Geschwindigkeit des Bezugssystems durch entsprechende Mittel, insbesondere Sensoren, der Einrichtung zum Bewegen des Bezugssystems erfasst und an die Steuerung übermittelt.

Die Stellung des Roboters ist eine Stellung einer oder mehrerer, insbesondere aller, (Bewegungs)Achsen des Roboters.

Entsprechend umfasst die zeitliche Ableitung einer Stellung des Roboters eine Geschwindigkeit und/oder Beschleunigung einer oder mehrerer, insbesondere aller, (Bewegungs)Achsen des Roboters.

Die Stellung bzw. zeitliche Ableitung wird somit in einer Ausführung im Achsraum des Roboters prognostiziert, in dem Begrenzungen besonders vorteilhaft überwacht werden können.

Die vorgegebene Begrenzung weist auf, in einer Ausführung ist, eine Begrenzung einer ein- oder mehrdimensionalen Belastung des Roboters, insbesondere also von Achs-, insbesondere Motor- und/oder Getriebelasten, insbesondere -momenten. Die Belastung des Roboters wird mithilfe eines dynamischen Modells des Roboters auf Basis seiner prognostizierten Stellung, Geschwindigkeit und Beschleunigung in der prognostizierten Stellung prognostiziert.

Hierdurch kann in einer Ausführung bei einer Planung eines Geschwindigkeitsprofils für die abzufahrende Arbeitsbahn eine Überlastung des Roboters vermieden werden, insbesondere das geplante Geschwindigkeitsprofil vor Abfahren der Arbeitsbahn bzw. des Geschwindigkeitsprofils umgeplant werden, wenn ein Überschreiten der vorgegebenen Begrenzung in der prognostizierten Stellung bzw. zeitlichen Ableitung prognostiziert wird.

Zusätzlich kann die vorgegebene Begrenzung in einer Ausführung eine ein- oder mehrdimensionale Begrenzung einer Arbeitsbereichs des Roboters aufweisen, insbesondere sein.

Hierdurch kann in einer Ausführung bereits vorab ein Verlassen des Arbeitsbereichs beim (zukünftigen) Abfahren der vorgegebenen Arbeitsbahn aufgrund der Bewegung des Bezugssystems prognostiziert und entsprechende Gegenmaßnahmen eingeleitet, insbesondere eine Fehlermeldung ausgegeben, das Bezugssystem verlangsamt, insbesondere angehalten, und/oder die vorgegebene Arbeitsbahn verändert werden.

Die Zeit(en) bis zum Erreichen der Pose(n) wird/werden in einer Ausführung auf Basis einer aktuellen Arbeitsbahn, die aktuell bzw. gerade abgefahren wird, insbesondere auf Basis eines hierfür geplanten Geschwindigkeitsprofils, prognostiziert.

Wenn für eine Arbeitsbahn ein Geschwindigkeitsprofil geplant ist, kann hieraus, insbesondere durch entsprechende zeitliche Integration, auch der Zeitpunkt prognostiziert werden, an dem die Arbeitsbahn abgefahren sein wird. Da die abzufahrende Arbeitsbahn der aktuellen Arbeitsbahn zeitlich, in einer Ausführung unmittelbar oder nach einem Überschleifen, nachfolgt, können der Beginn des Abfahrens der abzufahrenden Arbeitsbahn und bei bekanntem, insbesondere geplantem Geschwindigkeitsprofil für diese Arbeitsbahn auch das Erreichen weiterer Punkte dieser Arbeitsbahn bzw. dieses Geschwindigkeitsprofils, insbesondere durch entsprechende zeitliche Integration, prognostiziert werden.

Gleichermaßen kann die abzufahrende Arbeitsbahn auch nach einer vorgegebenen Wartezeit beginnen bzw. entsprechend vorgegebenen sein. Dann kann/können in einer Ausführung die Zeit(en) bis zum Erreichen der Pose(n) auf Basis der vorgegebenen Wartezeit prognostiziert werden.

In einer Ausführung wird, insbesondere während der Wartezeit bzw. des Abfahrens der aktuellen Arbeitsbahn, für die abzufahrende Arbeitsbahn ein Geschwindigkeitsprofil, insbesondere ein Profil einer Geschwindigkeit längs der Bahn und/oder relativ zum bewegten Bezugssystem, geplant, in einer Ausführung in an sich bekannter Weise als ein- oder mehrdimensionales Geschwindigkeitstrapez- bzw. -dreieckprofil und/oder mit einer vorgegebenen Beschleunigung bzw. Verzögerung und einer vorgegebenen (maximalen bzw. zulässigen) Konstantfahrgeschwindigkeit. Dann wird/werden in einer Ausführung die Stellung(en) bzw. zeitlichen Ableitung(en) auf Basis dieses geplanten Geschwindigkeitsprofils prognostiziert. Hierdurch kann in einer Ausführung die Überwachung von Geschwindigkeiten, Beschleunigungen und/oder Belastungen des Roboters verbessert und in einer Weiterbildung das geplante Geschwindigkeitsprofil in Abhängigkeit von der Überwachung gegebenenfalls umgeplant werden.

In einer Ausführung wird die (zukünftige) Pose des Bezugssystems (jeweils) auf Basis der aktuellen Pose und der Geschwindigkeit des Bezugssystems sowie der prognostizierten Zeit, insbesondere linear, extrapoliert. Hierdurch kann sie in einer Ausführung rechentechnisch vorteilhaft prognostiziert werden.

In einer Ausführung wird bzw. ist der Roboter, insbesondere seine roboterfeste Referenz, mit dem bewegten Bezugssystem (ein)synchronisiert, wobei die Pose(n) des Bezugssystems nach diesem (Ein)Synchronisieren prognostiziert wird/werden.

Hierdurch kann/können sie in einer Ausführung rechentechnisch vorteilhaft prognostiziert werden.

In einer Ausführung wird bzw. ist ein Überschleifen auf die und/oder von der abzufahrende(n) Arbeitsbahn vorgegeben, in einer Ausführung in an sich bekannter Weise durch Vorgabe eines Radius um einen Punkt der Arbeitsbahn, der ein Aufsetzen auf die bzw. Verlassen der Arbeitsbahn bestimmt. Dann wird in einer Ausführung die Zeit bis zum Erreichen der Pose(n) (jeweils) auf Basis einer, insbesondere geplanten, Überschleifbewegung prognostiziert.

Durch das Überschleifen können Arbeitsbahnen vorteilhaft, insbesondere sanft(er) und/oder schnell(er), abgefahren werden. Durch das Überschleifen kann sich jedoch der Zeitpunkt, an dem mit einem Abfahren der abzufahrenden Arbeitsbahn begonnen wird, verschieben, da diese nicht mehr an ihrem Anfangspunkt beginnend abgefahren wird, sondern an einem diesem nachgelagerten Bahnpunkt mit von Null verschiedener Geschwindigkeit. Entsprechend weist auch das bewegte Bezugssystem an den Bahnpunkten der abzufahrenden Arbeitsbahn andere Posen auf. Durch entsprechende Berücksichtigung dieser Verschiebung bei der Prognose der Zeit bis zum Erreichen der Pose(n) des Bezugssystems kann auch in einem solchen Fall ein Einhalten einer vorgegebenen Begrenzung vorteilhaft überwacht werden.

Nach einer Ausführung der vorliegenden Erfindung ist eine Steuerung zum Betreiben eines bzw. des Roboters bzw. einer bzw. der Roboteranordnung, insbesondere hard- und/oder software-, insbesondere programmtechnisch, zur Durchführung eines hier beschriebenen Verfahrens eingerichtet, weist in einer Ausführung auf:
- Mittel zum Vorgeben einer oder mehrerer, insbesondere nacheinander, abzufahrenden, insbesondere zukünftiger, Arbeitsbahn(en) des Roboters relativ zu einem bewegten Bezugssystem;
- Mittel zum Prognostizieren (jeweils) einer oder mehrerer Pose(n) des Bezugssystems, insbesondere relativ zu einer Umgebung oder Roboterbasis, für die bzw. eine oder mehrere der vorgegebenen Arbeitsbahn(en jeweils) auf Basis einer aktuellen Pose des Bezugssystems und einer Geschwindigkeit des Bezugssystems sowie einer Zeit bis zum Erreichen dieser Pose des Bezugssystems;
- Mittel zum Prognostizieren einer oder mehrerer Stellungen des Roboters und/oder einer oder mehrerer zeitlichen Ableitungen der Stellung(en) des Roboters, insbesondere also einer Geschwindigkeit und/oder Beschleunigung des Roboters in der (jeweiligen) Stellung bzw. relativ zu einer Umgebung bzw. Roboterbasis, für die (jeweils) abzufahrende Arbeitsbahn auf Basis der prognostizierten Pose(n) des Bezugssystems; und
- Mittel zum Überwachen eines Einhaltens einer vorgegebenen Begrenzung bei dieser bzw. diesen Stellung(en) bzw. zeitlichen Ableitung(en).

In einer Ausführung weist die Steuerung bzw. ihr(e) Mittel auf:
Mittel zum Prognostizieren einer Geschwindigkeit des Bezugssystems in der prognostizierten Pose und Mittel zum Prognostizieren der zeitliche Ableitung auf Basis dieser prognostizierten Geschwindigkeit; und/oder
Mittel zum Prognostizieren der Zeit bis zum Erreichen der Pose auf Basis einer aktuellen Arbeitsbahn, insbesondere auf Basis eines hierfür geplanten Geschwindigkeitsprofils, oder einer vorgegebenen Wartezeit; und/oder
Mittel zum Planen eines Geschwindigkeitsprofils für die abzufahrende Arbeitsbahn und Mittel zum Prognostizieren der Stellung bzw. zeitliche Ableitung auf Basis dieses geplanten Geschwindigkeitsprofils; und/oder
Mittel zum, insbesondere linearen, Extrapolieren der Pose auf Basis der aktuellen Pose und der Geschwindigkeit des Bezugssystems sowie der prognostizierten Zeit; und/oder
Mittel zum Synchronisieren des Roboters mit dem bewegten Bezugssystem vor dem Prognostizieren der Pose; und/oder
Mittel zum Vorgeben eines Überschleifens auf die abzufahrende und/oder von der abzufahrenden Arbeitsbahn und Mittel zum Prognostizieren der Zeit bis zum Erreichen der Pose auf Basis einer Überschleifbewegung.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter bzw. die Roboteranordnung betreiben, insbesondere steuern bzw. überwachen, kann.Ein Computerprogrammprodukt kann in einer Ausführung ein, insbesondere nichtflüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch die Steuerung bzw. ihr(e) Mittel.

Weitere Vorteile und Merkmale ergeben sich aus den Unteransprüchen und den Ausführungsbeispielen. Hierzu zeigt, teilweise schematisiert,:
- Fig. 1:: eine Roboteranordnung nach einer Ausführung der vorliegenden Erfindung mit einem Roboter;
- Fig. 2:: Geschwindigkeitsprofile; und
- Fig. 3:: ein Verfahren zum Betreiben des Roboters nach einer Ausführung der vorliegenden Erfindung.

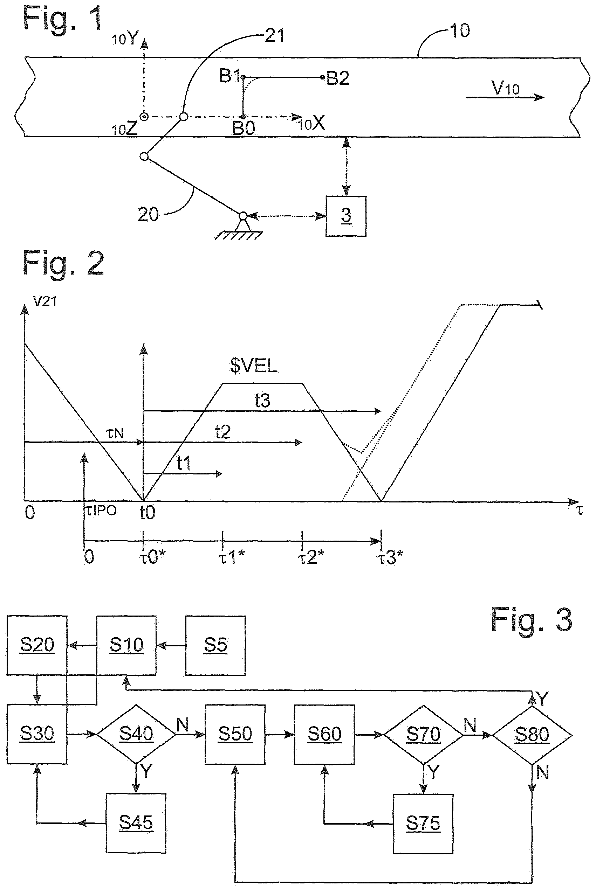

Fig. 1 zeigt eine Roboteranordnung nach einer Ausführung der vorliegenden Erfindung mit einem Förderband 10, das sich mit einer konstanten Geschwindigkeit V₁₀ bewegt, einem Roboter 20 und einer (Roboter)Steuerung 3 zum Steuern des Roboters.

Im Ausführungsbeispiel soll der Roboter 20 mit seinem Endeffektor 21 nacheinander mehrere Arbeitsbahnen abfahren, die in einem Schritt S5 relativ zu einem förderbandfesten Bezugssystem {₁₀X, ₁₀Y, ₁₀Z} durch Linearbewegungen vorgegeben werden.

Dabei soll der Endeffektor 21 ausgehend von einem Punkt B0 im Bezugssystem eine Linearbewegung quer zur Förderrichtung zu einem Punkt B1 abfahren und anschließend von diesem im Bezugssystem eine Linearbewegung in Förderrichtung zu einem Punkt B2 abfahren.

In einem Schritt S10 wird durch die Steuerung 3 hierzu für einen initialen Zeitpunkt auf Basis einer dort durch Messung bekannten Pose und Geschwindigkeit des Förderbands 10 und Stellung des Roboters 10 eine Pose und Relativgeschwindigkeit des Endeffektors 21 im Bezugssystem ermittelt, eine initiale Arbeitsbahn von dieser Pose des Endeffektors 21 im Bezugssystem zum Punkt B0 bestimmt und hierfür ein Geschwindigkeitsdreiecksprofil geplant, dass die Relativgeschwindigkeit auf Null reduziert.

In Schritt S20 wird das Abfahren dieser initialen Arbeitsbahn begonnen und dabei eine Zeitzählung τ initialisiert (τ = 0, vgl. Fig. 2).

Während die initialen Arbeitsbahn abgefahren und die aktuell( seit der Initialisierung vergangen)e Zeit τ_{IPO} ständig aktualisiert wird, wird in Schritt S30 für die nächste abzufahrende Arbeitsbahn B0 → B1 ein Geschwindigkeitstrapezprofil geplant, das mit dem Zeitpunkt τ_{N} beginnt, zu dem die initiale Arbeitsbahn abgefahren sein wird und der aus der Planung des initialen Geschwindigkeitsdreiecksprofils, das aktuell abgefahren wird, bekannt ist.

Dieses Geschwindigkeitstrapezprofil für die Arbeitsbahn B0 → B1 wird in an sich bekannter Weise mit einer vorgegebenen Beschleunigung $ACC für die anfängliche Beschleunigungsphase bzw. -rampe und die hierzu symmetrische abschließende Verzögerungsphase bzw. -rampe sowie eine vorgegebenen Konstantfahrgeschwindigkeit $VEL geplant, die jedoch bei zu niedriger Beschleunigung eventuell auch nicht erreicht wird.

Das Geschwindigkeitstrapezprofil wird dabei zunächst mit einer lokalen Zeit t geplant, in der es zum (lokalen) Zeitpunkt t0 = 0 beginnt, die Beschleunigungsphase bzw. -rampe bis t1 dauert, die (eventuelle) Konstantfahrphase bis zum (lokalen) Zeitpunkt t2, und in der es zum (lokalen) Zeitpunkt t3 beendet ist.

Für diese lokalen Zeitpunkte t0, ..., t3 werden durch Addition der Zeit τ_{N} (seit Initialisierung der Zeitzählung bzw. Beginn der Synchronisierung), zu dem die initiale Arbeitsbahn abgefahren sein wird, und Subtraktion der aktuell( seit der Initialisierung vergangen)e Zeit τ_{IPO} die Zeiten τ0*, ..., τ3* vom aktuellen Zeitpunkt bis zum jeweiligen Zeitpunkt t0, ..., t3 prognostiziert: τ0* = t0 + τ_{N} - τ_{IPO}, ..., τ3* = t3 + τ_{N} - τ_{IPO}. Ausgehend von der aktuellen Pose x₁₀(τ_{IPO}) und konstanten Geschwindigkeit V₁₀ des Förderbands 10 wird jeweils durch lineare Extrapolation die Pose und konstante Geschwindigkeit des Förderbands 10 prognostiziert, die das Förderband in τ0*, τ1*, τ2* und τ3* aufweisen wird: x₁₀(τ0*) ≈ x₁₀(τ_{IPO}) + V₁₀·τ0*, ..., x₁₀(τ3*) ≈ x₁₀(τ_{IPO}) + V₁₀·τ3*; V₁₀(τ0*) = V₁₀(τ1*) =...= V₁₀(τ3*) = V₁₀.

Daraus werden in Schritt S30 in an sich bekannter Weise mithilfe von Rückwärtstransformationen und numerischer Integration bzw. Differentiation die Achsstellungen, -geschwindigkeiten und -beschleunigungen des Roboters 20 in τ0*, τ1*, τ2* und τ3* prognostiziert.

Diese werden nun in Schritt S40 auf Überschreiten vorgegebener Begrenzungen überprüft, beispielsweise, ob sie außerhalb eines Arbeitsbereichs des Roboters liegen oder zulässige Achsgeschwindigkeiten oder -beschleunigungen überschreiten. Mithilfe eines dynamischen Modells des Roboters wird überprüft, ob in τ0*, τ1*, τ2* und τ3* zulässige Achslasten überschritten werden.

In einem solchen Fall (S40: "Y") kann die Planung angepasst, beispielsweise die vorgegebenen Beschleunigung $ACC und/oder Konstantfahrgeschwindigkeit $VEL in einem Schritt S45 reduziert und das Geschwindigkeitstrapezprofil für die Arbeitsbahn B0 → B1 neu geplant werden.

Andernfalls (S40: "N") wird nach Abfahren der initiale Arbeitsbahn nun in einem Schritt S50 das Abfahren der Arbeitsbahn B0 → B1 mit dem geplanten Geschwindigkeitstrapezprofil begonnen.

Während die Arbeitsbahn B0 → B1 abgefahren und die aktuell( seit der Initialisierung vergangen)e Zeit τ_{IPO} weiter ständig aktualisiert wird, wird in Schritt S60 in analoger, vorstehend mit Bezug auf Schritt S30 beschriebener Weise nun für die nächste abzufahrende Arbeitsbahn B1 → B2 ein neues Geschwindigkeitstrapezprofil geplant, das mit dem neuen Zeitpunkt τ_{N} beginnt, zu dem die Arbeitsbahn B0 → B1 abgefahren sein wird und der aus der Planung des Geschwindigkeitstrapezprofils, das aktuell abgefahren wird, bekannt ist.

Insbesondere werden in Schritt S60 mithilfe von Rückwärtstransformationen und numerischer Integration bzw. Differentiation die Achsstellungen, -geschwindigkeiten und -beschleunigungen des Roboters 20 in τ0*, τ1*, τ2* und τ3* prognostiziert, die nun der Zeit, bis das neu( geplant)e Geschwindigkeitstrapezprofil für die nächste Arbeitsbahn B1 → B2 beginnt (τ0*), die Beschleunigungsphase bzw. -rampe beendet ist (τ1*), die (eventuelle) Konstantfahrphase beendet ist (τ2*), bzw. die Verzögerungsphase bzw. -rampe beendet ist (τ3*) entsprechen.

In Schritt S70 werden diese Achsstellungen, -geschwindigkeiten und -beschleunigungen auf Überschreiten der vorgegebener Begrenzungen überprüft und in einem solchen Fall (S70: "Y") die Planung angepasst, beispielsweise die vorgegebenen Beschleunigung $ACC und/oder Konstantfahrgeschwindigkeit $VEL in einem Schritt S75 reduziert und das Geschwindigkeitstrapezprofil für die Arbeitsbahn B0 → B1 neu geplant.

Andernfalls (S70: "N") wird nach Abfahren der Arbeitsbahn B0 → B1 nun in Schritt S50 das Abfahren der Arbeitsbahn B1 → B2 mit dem geplanten Geschwindigkeitstrapezprofil begonnen und gegebenenfalls weitere Arbeitsbahnen in analoger Weise geplant, bis alle Arbeitsbahnen abgefahren sind (S80: "Y"), bzw. die Schritte S50 - S70 wiederholt, solange noch nicht alle vorgegebenen Arbeitsbahnen abgefahren sind (S80: "N").

Im obigen Beispiel wurden die Geschwindigkeitsprofile für die initiale Arbeitsbahn → B0 sowie die Arbeitsbahnen B0 → B1 und B1 → B2 jeweils mit Genauhalt zum lokalen Zeitpunkt t3 geplant.

In einer Abwandlung können die Arbeitsbahnen auch überschleifend abgefahren werden. Hierzu wird nach der Planung des Geschwindigkeitstrapezprofils für die zu planende Arbeitsbahn, beispielsweise für die Arbeitsbahn B1 → B2, die während des Abfahrens der Arbeitsbahn B0 → B1 geplant wird, in an sich bekannter Weise eine entsprechende Überschleifbewegung geplant, die die Arbeitsbahn B0 → B1 in einem vorgegebenen Abstand vor B1 verlässt und auf der Arbeitsbahn **B1** → B2 in einem vorgegebenen Abstand nach B1 aufsetzt und die Geschwindigkeiten an diesen Bahnpunkten stetig ineinander überführt.

Dies ist in Fig. 1, 2 gestrichelt angedeutet. Dabei verschiebt sich das Geschwindigkeitstrapezprofil für die Arbeitsbahn B1 → B2 auf der Zeitachse in das Geschwindigkeitstrapezprofil für die Arbeitsbahn B0 → B1 (vgl. Fig. 2), da die Arbeitsbahn B0 → B1 bzw. deren Geschwindigkeitstrapezprofil bereits vor t3 verlassen und die Arbeitsbahn B1 → B2 bzw. deren Geschwindigkeitstrapezprofil entsprechend früher begonnen wird. Hierzu wird das Geschwindigkeitstrapezprofil für die Arbeitsbahn B1 → B2 zunächst mit einer Abschätzung für die Überschleifbewegung geplant und nach Planung der Überschleifbewegung entsprechend zeitlich verschoben.

Ist zwischen zwei vorgegebenen Arbeitsbahnen eine Wartezeit vorgegeben, wird nach Ablauf dieser Wartezeit die Zeitzählung τ erneut initialisiert (τ = 0), da dies einem erneuten Anfahren eines Ausgangspunktes B0 bzw. (Ein)Synchronisieren entspricht.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: Förderband
- 20: Roboter
- 21: Endeffektor
- 3: Steuerung

- B0, B1, B2: Bahnpunkte
- t0,...,t3: lokale Zeiten eines Geschwindigkeitstrapezprofils
- τ_{IPO}: aktuelle Zeit
- V₁₀: Geschwindigkeit des Förderbands
- v₂₁: Bahngeschwindigkeit des Endeffektors im bewegten Bezugssystem
- ₁₀X, ₁₀Y, ₁₀Z: bewegtes Bezugssystem

## Patentansprüche

1. Verfahren zum Betreiben eines Roboters (20), mit den Schritten:
- Vorgeben (S5) wenigstens einer abzufahrenden Arbeitsbahn (B0→B1, B1→B2) des Roboters relativ zu einem bewegten Bezugssystem ({₁₀X, ₁₀Y, ₁₀Z});
- Prognostizieren (S30, S60) wenigstens einer Pose des Bezugssystems auf Basis einer aktuellen Pose und einer Geschwindigkeit (V₁₀) des Bezugssystems sowie einer Zeit bis zum Erreichen dieser Pose;
- Prognostizieren (S30, S60) wenigstens einer Stellung des Roboters und einer Geschwindigkeit und Beschleunigung des Roboters in dieser Stellung für die abzufahrende Arbeitsbahn auf Basis der prognostizierten Pose des Bezugssystems; und
- Überwachen (S40, S70) eines Einhaltens einer vorgegebenen Begrenzung bei dieser Stellung, Geschwindigkeit und Beschleunigung des Roboters,
wobei die vorgegebene Begrenzung eine Begrenzung einer ein- oder mehrdimensionalen Belastung des Roboters aufweist;
wobei die Belastung des Roboters mithilfe eines dynamischen Modells des Roboters auf Basis seiner prognostizierten Stellung, Geschwindigkeit und Beschleunigung in der prognostizierten Stellung prognostiziert wird.

2. Verfahren nach Anspruch 1, **dadurch gekennzeichnet, dass** die vorgegebene Begrenzung weiterhin eine Begrenzung eines Arbeitsbereichs des Roboters aufweist.

3. Verfahren nach einem der vorhergehenden Ansprüche, **gekennzeichnet durch** den Schritt:
- Prognostizieren (S30, S60) einer Geschwindigkeit des Bezugssystems in der prognostizierten Pose,
wobei die zeitliche Ableitung auf Basis dieser prognostizierten Geschwindigkeit prognostiziert wird.

4. Verfahren nach einem der vorhergehenden Ansprüche, **dadurch gekennzeichnet, dass** die Zeit bis zum Erreichen der Pose auf Basis einer aktuellen Arbeitsbahn, insbesondere auf Basis eines hierfür geplanten Geschwindigkeitsprofils, oder einer vorgegebenen Wartezeit prognostiziert wird.

5. Verfahren nach einem der vorhergehenden Ansprüche, **gekennzeichnet durch** den Schritt:
- Planen (S30, S60) eines Geschwindigkeitsprofils für die abzufahrende Arbeitsbahn,
wobei die Stellung bzw. zeitliche Ableitung auf Basis dieses geplanten Geschwindigkeitsprofils prognostiziert wird.

6. Verfahren nach einem der vorhergehenden Ansprüche, **dadurch gekennzeichnet, dass** die Pose auf Basis der aktuellen Pose und der Geschwindigkeit des Bezugssystems sowie der prognostizierten Zeit, insbesondere linear, extrapoliert wird.

7. Verfahren nach einem der vorhergehenden Ansprüche, **gekennzeichnet durch** den Schritt:
- Synchronisieren (S10) des Roboters mit dem bewegten Bezugssystem,
wobei die Pose nach dem Synchronisieren prognostiziert wird.

8. Verfahren nach einem der vorhergehenden Ansprüche, **gekennzeichnet durch** den Schritt:
- Vorgeben eines Überschleifens auf die abzufahrende und/oder von der abzufahrenden Arbeitsbahn,
wobei die Zeit bis zum Erreichen der Pose auf Basis einer Überschleifbewegung prognostiziert wird.

9. Steuerung zum Betreiben eines Roboters, **dadurch gekennzeichnet, dass** sie zur Durchführung eines Verfahrens nach einem der vorhergehenden Ansprüche eingerichtet ist.

10. Roboteranordnung mit einer Einrichtung (10) zum Bewegen eines Bezugssystems ({₁₀X, ₁₀Y, ₁₀Z}), wenigstens einem Roboter (20) zum Abfahren wenigstens einer relativ zu dem bewegten Bezugssystem vorgegebenen Arbeitsbahn (B0→B1, B1→B2), und einer Steuerung zum Betreiben eines Roboters nach dem vorhergehenden Anspruch.

11. Computerprogrammprodukt mit einem Programmcode, der auf einem von einem Computer lesbaren Medium gespeichert ist, zur Durchführung eines Verfahrens nach einem der vorhergehenden Ansprüche 1 bis 8.

## Claims

1. A method of operating a robot (20), the method comprising the steps of:
- specifying (S5) at least one working path (B0 → B1, B1 → B2) to be moved along by the robot relative to a moving reference system ({₁₀X, ₁₀Y, ₁₀Z});
- predicting (S30, S60) at least one pose of the reference system on the basis of a current pose and a speed (V₁₀) of the reference system as well as a time until this pose is reached;
- predicting (S30, S60), on the basis of the predicted pose of the reference system, at least one position of the robot and a speed and acceleration of the robot in this position for the working path to be moved along; and
- monitoring (S40, S70) compliance with a specified limit at this position, speed and acceleration of the robot,
wherein the specified limit comprises a limit of a one-dimensional or multidimensional load on the robot;
wherein the load on the robot is predicted with the aid of a dynamic model of the robot on the basis of its predicted position, speed and acceleration in the predicted position.

2. The method according to claim 1, **characterised in that** the specified limit further comprises a limit of a working range of the robot.

3. The method according to any one of the preceding claims, **characterised by** the step of:
- predicting (S30, S60) a speed of the reference system in the predicted pose,
wherein the time derivative is predicted on the basis of this predicted speed.

4. The method according to any one of the preceding claims, **characterised in that** the time until the pose is reached is predicted on the basis of a current working path, in particular on the basis of a speed profile planned for this purpose, or a specified waiting time.

5. The method according to any one of the preceding claims, **characterised by** the step of:
- planning (S30, S60) a speed profile for the working path to be moved along,
wherein the position or time derivative is predicted on the basis of this planned speed profile.

6. The method according to any one of the preceding claims, **characterised in that** the pose is extrapolated, in particular linearly, on the basis of the current pose and the speed of the reference system as well as the predicted time.

7. The method according to any one of the preceding claims, **characterised by** the step of:
- synchronising (S10) the robot with the moving reference system,
wherein the pose is predicted after the synchronisation.

8. The method according to any one of the preceding claims, **characterised by** the step of:
- specifying an overshoot on the working path to be moved along and / or from which to move along,
wherein the time until the pose is reached is predicted on the basis of an overshoot movement.

9. A control system for operating a robot, **characterised in that** it is arranged to carry out a method according to any one of the preceding claims.

10. A robot arrangement comprising a device (10) for moving a reference system ({₁₀X, ₁₀Y, ₁₀Z}), at least one robot (20) for moving along at least one working path (B0 → B1, B1 → B2) specified relative to the moved reference system, and a control system for operating a robot according to the preceding claim.

11. A computer program product with a program code which is stored on a computer-readable medium for carrying out a method according to any one of the preceding claims 1 to 8.

## Revendications

1. Procédé pour faire fonctionner un robot (20), avec les étapes de :
- prédéfinition (S5) d'au moins une trajectoire de travail (B0→B1, B1→B2) à parcourir du robot par rapport à un système de référence en mouvement ({₁₀X, ₁₀Y, ₁₀Z}) ;
- prévision (S30, S60) d'au moins une pose du système de référence sur la base d'une pose actuelle et d'une vitesse (V₁₀) du système de référence ainsi que d'un temps jusqu'à l'atteinte de cette pose ;
- prévision (S30, S60) d'au moins une position du robot et d'une vitesse et accélération du robot dans cette position pour la trajectoire de travail à parcourir sur la base de la pose prévue du système de référence ; et
- surveillance (S40, S70) d'un respect d'une limitation prédéfinie à cette position, vitesse et accélération du robot, dans lequel la limitation prédéfinie présente une limitation d'une charge unidimensionnelle ou multidimensionnelle du robot ;
dans lequel la charge du robot est prévue à l'aide d'un modèle dynamique du robot sur la base de ses position, vitesse et accélération prévues dans la position prévue.

2. Procédé selon la revendication 1, **caractérisé en ce que** la délimitation prédéfinie présente en outre une délimitation d'une zone de travail du robot.

3. Procédé selon l'une quelconque des revendications précédentes, **caractérisé par** l'étape de :
- prévision (S30, S60) d'une vitesse du système de référence dans la pose prévue,
dans lequel la dérivée temporelle est prévue sur la base de cette vitesse prévue.

4. Procédé selon l'une quelconque des revendications précédentes, **caractérisé en ce que** le temps jusqu'à l'atteinte de la pose est prévu sur la base d'une trajectoire de travail actuelle, en particulier sur la base d'un profil de vitesse prévu à cet effet, ou d'un temps d'attente prédéfini.

5. Procédé selon l'une quelconque des revendications précédentes, **caractérisé par** l'étape de :
- planification (S30, S60) d'un profil de vitesse pour la trajectoire de travail à parcourir,
dans lequel la position ou dérivée temporelle est prévue sur la base de ce profil de vitesse planifié.

6. Procédé selon l'une quelconque des revendications précédentes, **caractérisé en ce que** la pose est extrapolée sur la base de la pose actuelle et de la vitesse du système de référence ainsi que du temps prévu, en particulier linéairement.

7. Procédé selon l'une quelconque des revendications précédentes, **caractérisé par** l'étape de :
- synchronisation (S10) du robot avec le système de référence en mouvement, dans lequel la pose est prévue après la synchronisation.

8. Procédé selon l'une quelconque des revendications précédentes, **caractérisé par** l'étape de :
- prédéfinition d'un ajustement sur la trajectoire de travail à parcourir et/ou à partir de celle-ci,
dans lequel le temps nécessaire pour atteindre la pose est prévu sur la base d'un mouvement d'ajustement.

9. Commande pour faire fonctionner un robot, **caractérisée en ce qu'**elle est configurée pour mettre en œuvre un procédé selon l'une quelconque des revendications précédentes.

10. Agencement de robot avec un dispositif (10) pour le mouvement d'un système de référence ({₁₀X, ₁₀Y, ₁₀Z}), au moins un robot (20) pour le parcours d'au moins une trajectoire de travail (B0→B1, B1→B2) prédéfinie par rapport au système de référence en mouvement, et une commande pour faire fonctionner un robot selon la revendication précédente.

11. Produit-programme d'ordinateur avec un code de programme qui est stocké sur un support lisible par un ordinateur pour mettre en œuvre un procédé selon l'une quelconque des revendications précédentes 1 à 8.
